# EUROPÄISCHE PATENTSCHRIFT

(11) **EP 1 193 105 B1**
(45) Veröffentlichungstag und Bekanntmachung des Hinweises auf die Patenterteilung: **10.01.2007**
(21) Anmeldenummer: 01120211.6
(22) Anmeldetag: 23.08.2001
(51) Int. Cl.: B60K 31/00, G08G 1/0968, G08G 1/0967

(54) **Verfahren zur Längsregelung eines Fahrzeuges, bei dem Informationen eines Navigationssystems erfasst werden**
Method for longitudinal control of a vehicle using information from a navigation system
Procédé pour la régulation de la dynamique longitudinale d'un véhicule utilisant un système de navigation

(30) Priorität: 27.09.2000 DE 10047751
(43) Veröffentlichungstag der Anmeldung: 03.04.2002
(73) Patentinhaber: Bayerische Motoren Werke Aktiengesellschaft, 80809 München (DE)
(72) Erfinder: Tschernoster, Oliver, 80939 München (DE); Prömm, Uwe, 80686 München (DE)

(56) Entgegenhaltungen:
- EP-A- 0 989 012
- EP-B- 0 586 626
- DE-A- 19 514 023
- DE-A- 19 704 854

## Beschreibung

Die Erfindung bezieht sich auf ein Verfahren zur Längsregelung eines Fahrzeuges, bei dem Informationen eines Navigationssystems erfasst werden, nach dem Oberbegriff des Patentanspruchs 1.

Ein derartiges Verfahren zur Längsregelung ist beispielsweise aus der DE 196 38 511 A1 bekannt. Dabei handelt es sich insbesondere um Geschwindigkeitsregelsysteme, die die Antriebs- und/oder Bremssysteme eines Fahrzeuges in der Weise ansteuern, dass entweder eine Sollgeschwindigkeit oder ein Sollabstand zum vorausfahrenden Fahrzeug eingestellt wird. Bei dem aus der DE 196 38 511 A1 bekannten Verfahren werden derartige Geschwindigkeitsregelsysteme mit Informationen eines ebenfalls im Fahrzeug vorhandenen Navigationssystem beliefert. Hierzu kann beispielsweise ein dem Längsregelsystem zugeordnetes Steuergerät eine Schnittstelle zur Elektronik des Navigationssystems aufweisen.

Die EP 0 586 626 B offenbart ein Verfahren zur Längsregelung eines Fahrzeuges, bei dem abhängig von den Informationen des Navigationssystems bei Autobahneinfahrten eine Längsbeschleunigung vorgegeben wird.

Die bekannten Längsregelsysteme sind bisher so ausgelegt, dass im Normalbetrieb eine automatische für alle Situationen gleiche Längsbeschleunigung auf die gesetzte Sollgeschwindigkeit vorgenommen wird, wenn eine Folgefahrt beendet wird und/oder wenn die Längsregelung bzw. Geschwindigkeitsregelung aus dem ausgeschalteten Zustand (erneut) eingeschaltet wird.

Es ist Aufgabe der Erfindung, bei einem Längsregelsystem eingangs genannter Art unter Verwendung von Informationen des Navigationssystems Situationsanpassungen vorzunehmen.

Diese Aufgabe wird durch die Merkmale des Patentanspruchs 1 gelöst. Vorteilhafte Weiterbildungen der Erfindung sind die Gegenstände der abhängigen Ansprüche.

Besonderes Augenmerk wird beim Gegenstand der Erfindung auf die Situation bei Autobahneinfahrten gerichtet, bei der ein verstärkter Dynamikwunsch vom Fahrer zu erwarten ist.

Erfindungsgemäß wird mittels der Informationen des Navigationssystems die Wahrscheinlichkeit ("Einfahrtwahrscheinlichkeit") ermittelt, mit der das Fahrzeug eine Autobahneinfahrt befährt. Wenn die Einfahrtwahrscheinlichkeit größer als eine vorgegebene Schwelle (variabel oder fest) ist und die Geschwindigkeitsregelung eingeschaltet wird, wird eine gegenüber dem Normalbetrieb erhöhte Längsbeschleunigung vorgenommen. Vorzugsweise wird dabei ein Längsbeschleunigungsverlauf vorgegeben, durch den die Längsbeschleunigung ebenso wie der Längsbeschleunigungsgradient in Abhängigkeit von der Fahrzeuggeschwindigkeit erhöht vorgegeben wird.

Die Straßenkarte eines Navigationssystems besteht üblicherweise aus einer Vielzahl von in einer Baumstruktur angeordneten Streckenabschnitten. Zur Ermittlung der Einfahrtwahrscheinlichkeit wird zu Beginn eines jeweils aktuellen definierten Streckenabschnitts überprüft, ob eine Autobahneinfahrt vorgesehen ist und ob die Autobahneinfahrt auf der programmierten Route liegt und/oder ob mindestens eine Betriebsgröße des Fahrzeugs auf einen Autobahneinfahrwunsch des Fahrers hinweist. Derartige Betriebsgrößen sind z. B. die Blinkerbetätigung oder die gesetzte Fahrzeuggeschwindigkeit. Die Einfahrtwahrscheinlichkeit wird höher sein, wenn der Fahrer den Blinker in die jedem Land typische Richtung bei Autobahneinfahrten (z. B. in Deutschland nach links ("Rechtsverkehr"), in England nach rechts ("Linksverkehr")) betätigt und/oder wenn die Einfahrt Bestandteil der vom Fahrer im Navigationssystem programmierten Route ist. Weiterhin deutet beispielsweise eine hohe gesetzte Fahrzeuggeschwindigkeit ebenfalls auf eine höhere Einfahrtwahrscheinlichkeit hin.

Vorzugsweise wird das erfindungsgemäße Verfahren in ein ohnehin für ein Längsregelsystem vorgesehenes Steuergerät integriert. Hierzu muss lediglich eine Schnittstelle zum Navigationssystem hergestellt werden.

Die erfindungsgemäße Abfrage und Verarbeitung von Informationen aus dem Navigationssystem zum aktuellen und zukünftigen Kontext erlaubt eine adaptive an die jeweilige Situation angepasste und fahrertypische Regelung der Längsdynamik mit einem Längsregelsystem. Die Funktionsqualität und der Fahrkomfort werden gesteigert.

In der Zeichnung ist ein Ausführungsbeispiel der Erfindung dargestellt. Es zeit
- Fig. 1: die Grundstruktur des Konzepts zur situationsangepassten Längsdynamikregelung
- Fig. 2: die Einfahrtwahrscheinlichkeit abhängig vom Abstand des Fahrzeugs zu einer Autobahneinfahrt
- Fig. 3: einen gegenüber dem Normalbetrieb erhöhten Längsbeschleunigungsverlauf
- Fig. 4: die zusätzliche Abhängigkeit des Längsbeschleunigungsverlaufs von der Fahrzeuggeschwindigkeit

Das im Fahrzeug enthaltene erfindungsgemäße Längsregelsystem hat zu entscheiden, wie groß die Wahrscheinlichkeit w (Einfahrtwahrscheinlichkeit) ist, mit der das Fahrzeug eine Autobahneinfahrt befährt.

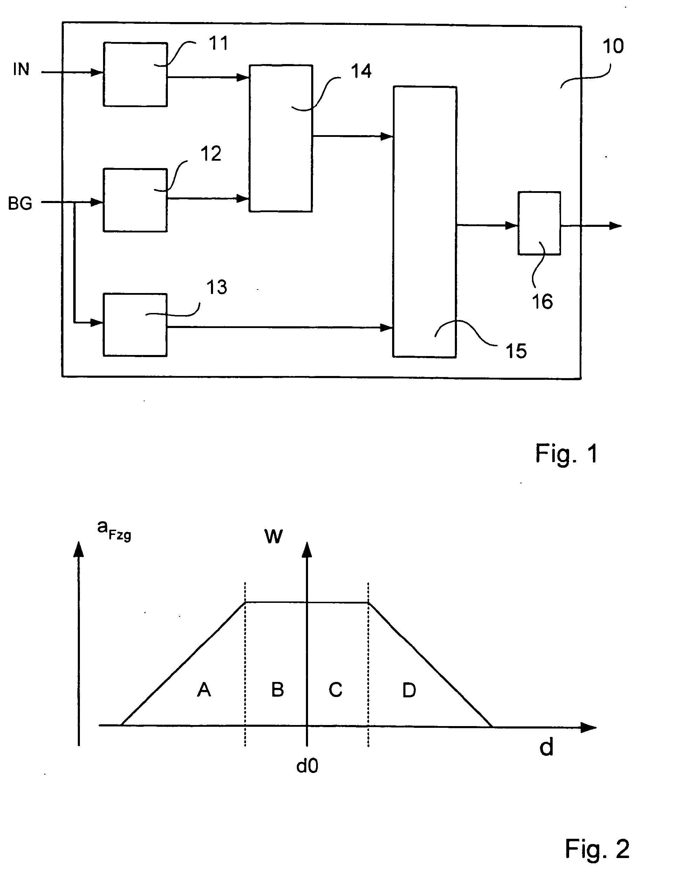

Hierzu wertet das in Fig. 1 näher dargestellte Steuergerät 10 des Längsregelsystems im Fahrzeug zum einen Informationen IN des Navigationssystems sowie weitere Betriebsgrößen BG des Fahrzeugs aus.

Die Informationen IN können beispielsweise die Ist-Position des Fahrzeugs, die Straßenklasse (Autobahn, nicht Autobahn), die Länge des jeweiligen Streckenabschnittes, das Vorhandensein einer Autobahneinfahrt im Streckenabschnitt und die Information sein, ob eine/die Autobahneinfahrt Bestandteil der vom Fahrer programmierten Route ist. Die Betriebsgrößen BG können z.B. ein Blinkersignal, ein Lenkwinkelsignal, ein Fahrzeuggeschwindigkeitssignal, ein Fahrpedalgebersignal oder Betätigungssignale des dem Längsregelsystem zugeordneten Bedienhebels sein.

Im Vorausschau-Block 11 wird zu Beginn des Streckenabschnitts geprüft, ob eine Autobahneinfahrt vorhanden ist und ob diese Bestandteil der Route ist. Im Einfahrwunschermittler 12 wird überprüft, ob die gesetzte Fahrzeuggeschwindigkeit hoch oder niedrig ist und ob der Blinker in Richtung Einfahrt gesetzt ist. Die Einfahrtwahrscheinlichkeit w wird im Berechnungsblock 14 abhängig vom Ergebnis dieser Abfragen ermittelt.

Das Konzept zur Berechnung der Einfahrtwahrscheinlichkeit w wird am Beispiel der sogenannten Basiswahrscheinlichkeit erläutert (Fig. 2). Sie ist abhängig von der Positionierungsgenauigkeit (Qualität des Navigationssystems) und vom Abstand d des Fahrzeugs von der Autobahneinfahrt. Beim Abstand d0 befindet sich theoretisch die Autobahneinfahrt. Wesentlich ist der sogenannte Entscheidungsabschnitt A (vor der theoretischen Einfahrt). Wenn die Geschwindigkeitsregelung eingeschaltet wird (bei Folgefahrt beendet und/oder bei Sollgeschwindigkeit neu gesetzt), kann beispielsweise im Abschnitt A (für vor der theoretischen Einfahrt) bzw. D (für nach der theoretischen Einfahrt) proportional zum Verlauf der Wahrscheinlichkeit w die Längsbeschleunigung a erhöht werden. In den Abschnitten B bzw. C kann die maximale Längsbeschleunigung aₘₐₓ vorgegeben werden.

Im Entscheider 15 wird die Erhöhung der Längsbeschleunigung deaktiviert, wenn über den Dynamikbedarfermittler 13 vom Fahrer der Wunsch über weniger Antriebsleistung erfasst wird (z. B. über das dem Längsregelsystem zugeordnete Bedienelement zum Reduzieren der Setzgeschwindigkeit). Im Parameteradaptionsblock 16 werden die Reglerparameter für die zu regelnden Größen (hier: Sollgeschwindigkeit bzw. Sollbeschleunigung und Sollbeschleunigungsgradient) entsprechend dem Ausgang des Entscheiders 15 vorgegeben und über den Regler an die Aktuatoren ausgegeben.

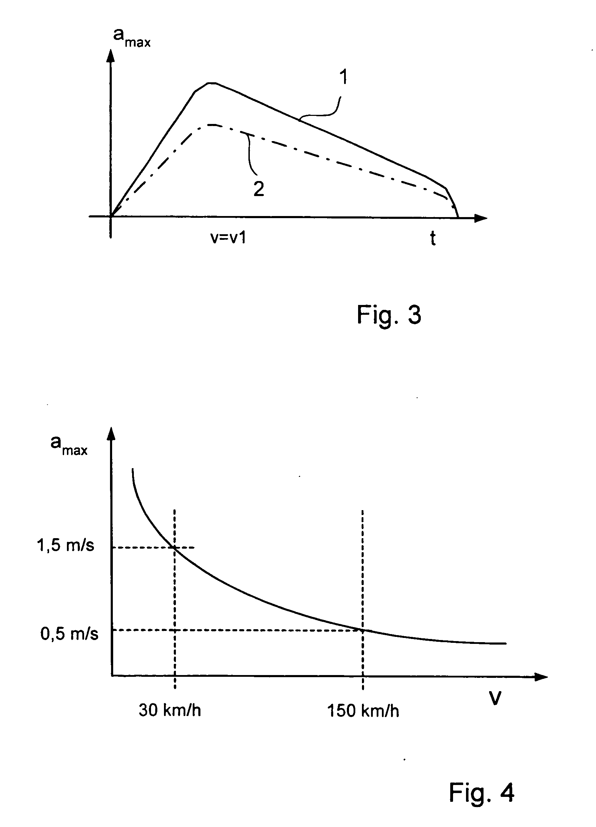

In Fig. 3 ist die maximale Längsbeschleunigung aₘₐₓ über der Zeit t (für eine bestimmte Fahrzeuggeschwindigkeit v=v1) aufgetragen. Bei maximaler Einfahrtwahrscheinlichkeit (w=1) wird der maximale Längsbeschleunigungsverlauf 1 (einschließlich dem typischen Längsbeschleunigungsgradienten zur Erzeugung eines Beschleunigungs-"Rucks" zu Beginn der Beschleunigung) vorgegeben. Im Normalbetrieb, insbesondere bei minimaler Einfahrtwahrscheinlichkeit w=0 wird der Längsbeschleunigungsverlauf 2 vorgegeben. Zwischenwerte sind möglich. Insbesondere können die Längsbeschleunigungsverläufe 1 bzw. 2 zusätzlich entsprechend dem in Fig. 4 vorgegebenen Verlauf der maximalen Längsbeschleunigung aₘₐₓ auch abhängig von der Fahrzeuggeschwindigkeit v variabel vorgegeben werden.

## Patentansprüche

1. Verfahren zur Längsregelung eines Fahrzeuges, bei dem Informationen eines Navigationssystems erfasst werden und bei dem abhängig von den Informationen des Navigationssystems ein Sollwert mindestens eines Parameters zur Längsregelung bestimmt wird, **dadurch gekennzeichnet, dass** mittels der Informationen (IN) des Navigationssystems die Wahrscheinlichkeit (w) ermittelt wird, mit der das Fahrzeug eine Autobahneinfahrt befährt, und dass wenn die Geschwindigkeitsregelung eingeschaltet wird, eine gegenüber dem Normalbetrieb erhöhte Längsbeschleunigung (a; aₘₐₓ) vorgenommen wird, wenn die Wahrscheinlichkeit (w) größer als eine vorgegebene Schwelle ist.

2. Verfahren nach Patentanspruch 1, **dadurch gekennzeichnet, dass** die Längsbeschleunigung sowie der Längsbeschleunigungsgradient in Abhängigkeit von der Fahrzeuggeschwindigkeit (v) erhöht vorgegeben werden.

3. Verfahren nach Patentanspruch 1 oder 2, **dadurch gekennzeichnet, dass** zur Ermittlung der Wahrscheinlichkeit (w) zu Beginn eines jeweils aktuellen definierten Streckenabschnitts überprüft wird, ob eine Autobahneinfahrt vorgesehen ist und ob die Autobahneinfahrt auf der programmierten Route liegt und/oder ob mindestens eine Betriebsgröße (BG) des Fahrzeugs auf einen Autobahneinfahrwunsch des Fahrers hinweist.

4. Steuergerät mit Mitteln zur Durchführung des Verfahrens nach einem der Patentansprüche 1 bis 3.

## Claims

1. A method for the longitudinal control of a vehicle, in which information from a navigation system is recorded and, in which, depending on the information from the navigation system, a desired value of at least one parameter for longitudinal control is determined, **characterised in that**, using the information (IN) from the navigation system, the probability (w) is determined, with which the vehicle will travel on a motorway entry slip road, and **in that**, when the speed control is switched on, a longitudinal acceleration (a; aₘₐₓ) which is increased compared to normal operation is carried out, when the probability (w) is greater than a predetermined threshold.

2. A method according to claim 1, **characterised in that** a higher longitudinal acceleration and longitudinal acceleration gradient are specified as a function of the vehicle speed (v).

3. A method according to claim 1 or 2, **characterised in that**, to determine the probability (w) at the beginning of a respectively currently defined route section, a check is made as to whether a motorway entry slip road is provided and whether the motorway entry slip road is on the pre-programmed route and/or whether at least one operating variable (BG) of the vehicle indicates a desire by the driver to enter a motorway.

4. Control apparatus comprising means for carrying out the method according to any one of claims 1 to 3.

## Revendications

1. Procédé pour la régulation longitudinale d'un véhicule, selon lequel on saisit des informations d'un système de navigation et, en fonction des informations du système de navigation, on détermine une valeur de consigne d'au moins un paramètre pour la régulation longitudinale,
**caractérisé en ce qu'**
au moyen des informations (IN) du système de navigation, on détermine la probabilité (w) avec laquelle le véhicule roule sur une entrée d'autoroute, et
lorsque le régulateur de vitesse est enclenché, une accélération longitudinale (a ; aₘₐₓ), accrue par rapport au mode normal, est effectuée lorsque la probabilité (w) est supérieure à un seuil prédéfini.

2. Procédé selon la revendication 1,
**caractérisé en ce que**
l'accélération longitudinale ainsi que le gradient d'accélération longitudinale sont fixés à une valeur accrue en fonction de la vitesse du véhicule (v).

3. Procédé selon la revendication 1 ou 2,
**caractérisé en ce que**
pour déterminer la probabilité (w) au début d'un tronçon déterminé actuel, on vérifie si une entrée d'autoroute est prévue et si l'entrée d'autoroute se trouve sur l'itinéraire programmé et/ ou si au moins une grandeur de service (BG) du véhicule indique un souhait du conducteur à entrer sur l'autoroute.

4. Appareil de commande comportant des moyens pour la réalisation du procédé selon l'une quelconque des revendications 1 à 3.
